# FASCICULE DE BREVET EUROPEEN

(11) **EP 1 651 899 B1**
(45) Date de publication et mention de la délivrance du brevet: **19.05.2010**
(21) Numéro de dépôt: 04767359.5
(22) Date de dépôt: 17.06.2004
(51) Int. Cl.: F16L 19/00

(54) **DISPOSITIF DE VERROUILLAGE ET RACCORD DE CANALISATION AINSI EQUIPE**
VERRIEGELUNGSVORRICHTUNG UND DAMIT VERSEHENES LEITUNGSANSCHLUSSSTÜCK
LOCKING DEVICE AND A LINE FITTING PROVIDED THEREWITH

(30) Priorité: 01.07.2003 FR 0307939
(43) Date de publication de la demande: 03.05.2006
(73) Titulaire: JPB SYSTEME, 77170 Brie-Comte-Robert (FR)
(72) Inventeur: MARC, Jean-Pierre, F-77370 Nangis (FR); BARRE, Bernard, F-94140 Alfortville (FR)
(74) Mandataire: Pontet, Bernard
(86) Numéro de dépôt international: PCT/FR2004/001497
(87) Numéro de publication internationale: WO 2005/015071

(56) Documents cités:
- US-A- 3 201 149
- US-A- 5 362 110
- US-B1- 6 293 595

## Description

La présente invention concerne un dispositif de verrouillage pour deux éléments qui sont en relation de vissage mutuel.

La présente invention concerne également un raccord de canalisation équipé d'un tel dispositif.

Le dispositif de verrouillage a pour fonction d'empêcher le dévissage intempestif des deux éléments l'un par rapport à l'autre, notamment dans les applications où les deux éléments sont soumis en service à des vibrations ou trépidations.

L'invention vise plus particulièrement mais non limitativement les accouplements standardisés comprenant un mamelon à l'extrémité de l'une des canalisations, destiné à être pressé dans un évasement de l'extrémité de l'autre canalisation, sous l'action de serrage d'un écrou prisonnier de l'une des canalisations et venant en prise avec un filetage formé sur l'autre canalisation.

Le US 6 293 595 B1 décrit un tel dispositif de verrouillage capable de venir simultanément en prise, par un mouvement axial sous la pression d'un ressort, avec la conformation à six pans de l'écrou et avec un organe d'arrêt solidaire de l'embout mâle de la canalisation. Pour pouvoir séparer les deux embouts de canalisation, il faut repousser l'organe de couplage à l'encontre du ressort de rappel jusque dans la position où il est désolidarisé de la conformation à six pans prévue sur l'écrou et/ou de l'organe d'arrêt solidaire de l'embout mâle de la canalisation.

Pendant le vissage ou le dévissage, la présence de l'outil sur l'écrou empêche l'organe de couplage de revenir en position de verrouillage. Dès que l'outil est retiré à la fin du vissage, l'organe de couplage est libéré pour passer en position de verrouillage sous l'action du ressort.

Ce dispositif connu a l'avantage considérable d'être adaptable sur un raccord de canalisation standard sans autres modifications que la simple fixation d'un corps porteur sur l'embout mâle du raccord.

Dans certaines applications, où l'accessibilité est difficile, en particulier dans l'aéronautique, il est souhaitable de minimiser la gêne créée par le dispositif de verrouillage. Avec le dispositif connu, si l'écrou résiste à l'effort de dévissage exercé par l'opérateur, l'opérateur qui ne voit pas l'écrou ne sait pas si la résistance est due à la relation de vissage proprement dite ou à un mauvais dégagement de l'organe de couplage. En outre, et de toute façon, il doit connaître de mémoire la structure du dispositif de verrouillage pour savoir effectuer avec son outil un mouvement axial le long de la conformation à six pans pour repousser l'organe de couplage avant de pouvoir dévisser.

Le but de la présente invention est de perfectionner le dispositif de verrouillage connu sur le plan de la facilité d'utilisation.

Suivant l'invention, le dispositif de verrouillage pour un accouplement vissant comprenant un premier et un second élément qui sont rotatifs l'un par rapport à l'autre lors du vissage, un premier des éléments comprenant un premier filetage et une conformation de prise de rotation distante de ce premier filetage, le dispositif de verrouillage étant monté sur le deuxième élément et comprenant :
- un organe de couplage avec la conformation de prise,
- un organe d'arrêt solidaire en rotation d'un corps porté par le deuxième élément,
- des moyens d'accouplement libérables entre l'organe de couplage et l'organe d'arrêt,
est caractérisé en ce que les moyens d'accouplement sont du type à cliquet permettant la rotation relative dans le sens du dévissage lorsque l'actionnement rotatif de dévissage surmonte une résistance élastique prédéterminée.

Il a été trouvé suivant l'invention qu'un système de cliquet réversible est très efficace pour empêcher le dévissage sous l'effet de vibrations. Le cliquet ne libère les deux éléments l'un par rapport à l'autre que lorsqu'une résistance élastique a été surmontée sur une distance angulaire suffisante pour atteindre le point de franchissement du sommet d'une dent de cliquet. Or les excitations vibratoires dans un sens ou dans l'autre sont de trop courte durée pour que ce processus de franchissement du sommet de dent soit possible. Le processus peut certes s'amorcer, mais il est suivi par un retour élastique à la situation d'encliquetage la plus stable.

Par contre, sous l'action d'un effort de dévissage volontaire, l'opérateur ne perçoit aucune anomalie ni aucune gêne.

Le dévissage est donc possible sans que l'opérateur n'ait de précautions ou de gestes particuliers à accomplir. Il lui suffit d'engager son outil sur le six-pans ou autre conformation de prise équipant le premier élément de l'accouplement vissant, et de manoeuvrer son outil comme à l'accoutumée.

Le dispositif de verrouillage selon l'invention peut être conçu entièrement compatible avec les raccords de canalisation standards sans que ceux-ci nécessitent d'autres modifications que la fixation du corps du dispositif sur le deuxième élément. De préférence, c'est l'écrou qui constitue le deuxième élément. Il est en effet plus facile de réaliser un écrou spécial, notamment dans le cas du post-équipement. En outre si l'écrou est équipé, on peut dégager complètement les deux embouts lorsqu'ils sont à l'état désaccouplé, simplement en faisant coulisser l'écrou suffisamment loin en arrière le long de la canalisation qui le porte, et le dispositif de verrouillage ne crée plus aucune gêne pour déplacer une canalisation latéralement par rapport à l'autre.

Suivant un second aspect de l'invention, le raccord de canalisation comprenant un embout de canalisation muni d'un filetage mâle et un écrou vissable sur le filetage mâle et monté rotatif sur un autre embout de canalisation, est caractérisé en ce qu'il comprend en outre un dispositif de verrouillage selon le premier aspect, pour verrouiller sélectivement la rotation relative des deux éléments constitués par l'écrou et l'embout muni d'un filetage mâle.

D'autres particularités et avantages de l'invention ressortiront encore de la description ci-après, relative à des exemples non limitatifs.

Aux dessins annexés :
- la figure 1 est une vue en coupe axiale d'un raccord de canalisation selon l'invention, dans une première variante en position de verrouillage dans la demie-vue supérieure et dans une seconde variante en position de déverrouillage lors d'un début de dévissage ou d'une fin de vissage dans la demie-vue inférieure ;
- la figure 2 est une vue en perspective du dispositif de verrouillage et d'une partie de l'écrou avant montage du dispositif sur l'écrou, les parties haute et basse de la figure 2 illustrant à nouveau la première et la deuxième variante, respectivement ;
- la figure 3 est une vue partielle en coupe suivant III-III de la figure 1 ;
- la figure 4 est une vue en perspective des organes de couplage et d'arrêt, ainsi que d'une partie du ressort ; et
- la figure 5 est une vue analogue à la demie-vue supérieure de la figure 1, mais dans le cas d'un raccord de canalisation usé.

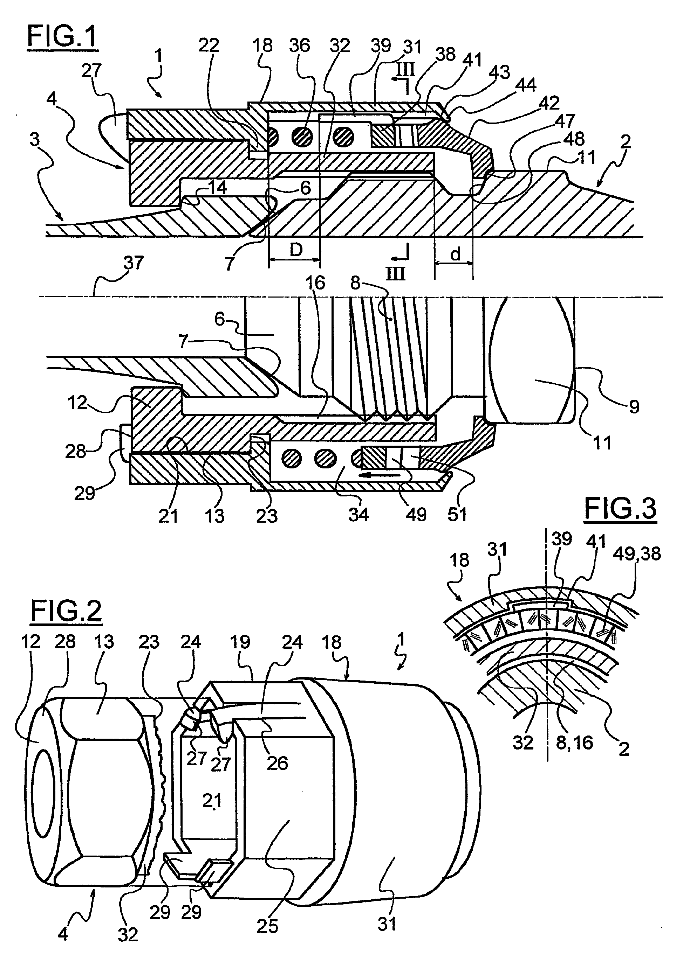

Comme le montre la figure 1, le dispositif de verrouillage 1 selon l'invention est adaptable à un accouplement de canalisations comprenant un embout mâle 2 -ou mamelon-, solidaire de l'une des canalisations à raccorder, et un embout femelle 3, rendu solidaire de l'autre des canalisations à raccorder, ainsi qu'un écrou 4.

Les embouts 2 et 3 comportent à leur extrémité libre une conformation d'étanchéité mâle, de forme ovoïde 6 et respectivement une conformation d'étanchéité femelle 7, de forme tronconique, destinées à prendre appui de manière étanche l'une contre l'autre. A partir de la conformation d'étanchéité ovoïde 6, le mamelon 2 comporte un filetage mâle 8 puis une collerette 9 portant sur sa périphérie une conformation de prise de rotation telle qu'une conformation à six-pans 11. La conformation 11 est distante ou disjointe du filetage 8 de l'élément 2 en ce sens que cette conformation 11 que l'on va utiliser pour le verrouillage n'est pas constituée par une altération du filetage telle qu'un méplat ou une rainure supprimant une partie des filets.

L'écrou 4 comporte à son extrémité arrière, opposée à l'embout 2, un collet intérieur 12 et une conformation extérieure de prise de rotation 13 telle qu'une conformation à six-pans. Le collet intérieur 12 vient en prise derrière un épaulement 14 de l'embout 3. L'épaulement 14 est tourné en direction opposée à l'embout 2 pour retenir l'écrou 4 prisonnier et pour recevoir de la part de l'écrou 4 une force sollicitant la conformation d'étanchéité 7 en appui d'étanchéité contre la conformation d'étanchéité 6 de l'embout 2.

L'écrou 4 est prolongé vers l'avant par un tube 32 qui comporte à partir de son extrémité antérieure tournée vers l'embout 2 un filetage femelle 16 capable de coopérer avec le filetage 8 de l'embout 2 pour produire la force de serrage précitée.

Le dispositif de verrouillage 1 selon l'invention comprend un corps support 18 - ou coupelle - comportant à son extrémité arrière un manchon 19 qui est emboîté autour de la conformation à six-pans 13 de l'écrou 4. A cet effet, le manchon 19 comprend une surface intérieure 21 de forme prismatique à contour hexagonal qui permet au manchon 19 d'être emmanché sensiblement sans jeu sur la conformation à six-pans 13 (voir aussi figure 2). Une fois cet emmanchement réalisé, l'écrou 4 et le corps 18 sont solidaires en rotation. En outre, le manchon 19 est équipé de moyens de retenue pour solidariser axialement le manchon 19 et donc le corps 18 avec l'écrou 4. Ces moyens comprennent à l'extrémité annulaire intérieure de la surface 21 un collet intérieur 22 (figure 1) destiné à buter contre un épaulement avant 23 de l'écrou 4, adjacent au bord antérieur de la conformation 13. Les moyens de retenue comprennent en outre, dans la version représentée en haut des figures 1 et 2, des pattes d'encliquetage 24 découpées dans la paroi du manchon 19 par des fentes 26 essentiellement axiales s'ouvrant dans le bord arrière du manchon 19. Les pattes d'encliquetage 24 sont terminées par des becs d'encliquetage 27 qui viennent en prise, lorsque l'assemblage est réalisé, sur la face arrière 28 de l'écrou 4, adjacente au bord annulaire arrière de la conformation à six-pans 13.

Dans la version représentée en bas des figures 1 et 2, les moyens de retenue comprennent des languettes de sertissage 29 qui sont initialement dans le prolongement de certaines au moins des faces de la surface intérieure 21 du manchon 19 (figure 2). Une fois l'assemblage réalisé, les languettes 29 sont rabattues plastiquement contre la surface postérieure 28 de l'écrou 4, comme représenté en bas de la figure 1.

Le manchon 19 présente sur sa surface extérieure sa propre conformation à six-pans 25 destinée à se substituer à la conformation à six-pans 13 de l'écrou pour permettre de manoeuvrer l'écrou en rotation à l'aide d'un outil tel qu'une clé (non représentée) lorsque le dispositif 1 est en place.

A son extrémité antérieure, le manchon 19 est raccordé rigidement et d'un seul tenant à l'extrémité arrière d'un jupe 31 de forme générale cylindrique qui s'étend autour du tube 32 en formant une chambre annulaire 34 entre la jupe 31 et le tube 32.

Il y a dans la chambre 34, à partir de son extrémité arrière, un ressort hélicoïdal de compression 36 ayant même axe 37 que la canalisation, un organe d'arrêt 38 de forme annulaire autour de l'axe 37 et comportant des patins 39 montés coulissant dans des rainures axiales 41 de la paroi intérieure de la jupe 31, et enfin un organe de couplage 42 comportant sur sa périphérie extérieure un bossage 43 qui empêche l'organe de couplage 42 de se dégager de la jupe 31 en butant contre un rebord terminal 44 de la jupe 31, formé par déformation plastique, saillant radialement vers l'axe 37.

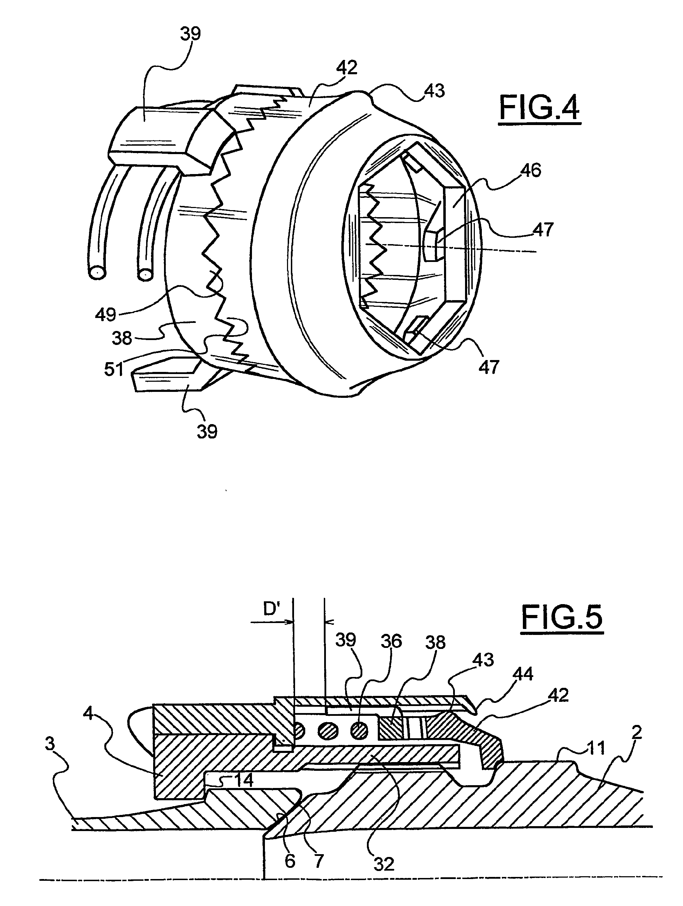

Comme le montre en particulier la figure 4, l'organe de couplage 42 fait saillie à l'extérieur de la jupe 31 au-delà du rebord terminal 44 et présente dans sa partie antérieure, qui dépasse de la jupe 31 au moins quand le ressort 36 est à l'état relativement peu comprimé, une empreinte à six-pans femelle 46 d'un calibre correspondant à celui de la conformation à six-pans mâle 11 du premier élément 2. La largeur axiale de cette empreinte est beaucoup plus petite que celle de la conformation à six-pans 11 et elle est délimitée, à son extrémité arrière, par des butées 47 destinées à prendre appui contre un épaulement 48 adjacent à la conformation à six-pans 11. Cet appui limite l'emprise axiale de l'empreinte 46 sur la conformation 11.

Le dimensionnement axial de l'ensemble est tel que lorsque les deux embouts 2, 3 à l'état neuf (figure 1) sont pressés de façon étanche axialement l'un contre l'autre par le serrage exercé par l'écrou 4, l'organe de couplage 42 est en prise avec la conformation à six-pans 11, les butées 47 sont appuyées contre l'épaulement 48 tandis que la butée 43 est en quasi-appui contre le rebord 44.

Comme illustré à la figure 5, les raccords de canalisation du type générique visé par l'invention ont tendance à s'user par contraction radiale de la partie mâle 6, et élargissement ou évasement de la partie tronconique 7. Ceci a pour conséquence d'augmenter la course de l'écrou 4 le long du premier élément 2 qui est nécessaire pour que le serrage axial souhaitable soit atteint. Ceci est pris en compte selon l'invention grâce à une course suffisante de compression du ressort 36, et des distances de mobilité axiale initiales suffisantes d (figure 1) entre l'organe de couplage 42 et l'extrémité libre de l'écrou 4, et D entre l'extrémité arrière des patins 39 et le fond de la chambre 24.

L'organe d'arrêt 31 et l'organe de couplage 42 présentent sur leurs bords annulaires tournés l'un vers l'autre des dents 49, 51 dirigées axialement et présentant un profil symétrique. C'est-à-dire que par rapport à une direction circonférentielle, les dents, qui sont de configuration triangulaire, ont chacune une face avant et une face arrière qui ont même pente oblique. En outre, les dents 49 de l'organe d'arrêt 31 et les dents 51 de l'organe de couplage 42 ont des profils complémentaires de sorte qu'elles peuvent s'interpénétrer comme représenté en haut de la figure 1 et aux figures 4 et 5. Par contre en bas de figure 1, les dents sont pointes contre pointes.

Il est très facile d'équiper un raccord de canalisation avec le dispositif de verrouillage selon l'invention. L'écrou étant complètement dissocié du premier élément 2, et celui-ci étant séparé du deuxième élément 3, on emmanche le dispositif 1 sur l'écrou 4 à partir de l'extrémité antérieure de l'écrou 4 jusqu'à ce que le collet 22 bute contre l'épaulement 23. Dans la réalisation encliquetable, les pattes 24 sont sollicitées radialement vers l'extérieur pour franchir l'épaulement 23 puis se redétendent élastiquement vers l'intérieur lorsque les becs 27 peuvent s'enclencher derrière la face 28 de l'écrou 4. Dans la version avec languettes de sertissage 29, l'emmanchement s'effectue sans résistance jusqu'à ce que le collet 22 bute contre l'épaulement 23. A ce stade, on rabat les languettes de sertissage 29 radialement vers l'intérieur comme représenté en bas de la figure 1. Il est remarquable que le dispositif 1 forme un ensemble d'un seul tenant se montant entièrement sur un seul des éléments à verrouiller mutuellement, sans nécessiter aucun aménagement sur l'autre élément.

Pour accoupler le raccord de canalisation, on visse l'écrou 4 autour du filetage 8 de l'embout 2 en utilisant une clé qui est en prise avec la conformation à six-pans 11 de l'embout 2 et une autre clé qui est en prise avec la conformation à six-pans 25 du dispositif 1. L'organe d'arrêt 42 est en butée contre le rebord 44 sous l'action du ressort de compression 36. A l'approche de la fin du vissage, l'organe de couplage 42 bute contre l'épaulement 48 de l'embout 2, le ressort 36 commence à se comprimer puis, comme l'organe 42 est entraîné en rotation par l'interpénétration des dents 49 et 51, son empreinte 46 finit par coïncider avec la conformation 11 de l'embout 2 et le ressort 36 provoque, en se redétendant, l'emboîtement de l'empreinte 46 sur la conformation 11. Dès lors, l'organe de couplage 42 est empêché de tourner avec l'écrou 11 et les dents 49 et 51 cliquettent les unes sur les autres avec à chaque fois une brève compression du ressort 36 lorsque les dents 49 et 51 se retrouvent pointes contre pointes comme illustré en bas de la figure 1. On aboutit finalement à la situation représentée en haut de la figure 1, où la canalisation est serrée, étanche, et l'écrou 4 est empêché de tourner sous l'effet des vibrations ou autres sollicitations parasites grâce au verrouillage de l'écrou 4 avec l'embout 2 via le corps 18, l'organe d'arrêt 38 empêché de tourner par rapport au corps 18 grâce aux patins 39 engagés dans les rainures 41, et l'organe de couplage 42 empêché de tourner par rapport à l'organe d'arrêt 38 en raison de l'interpénétration des dents 49 et 51. Si la rotation de l'écrou en fin de serrage se termine dans une position où les dents 49 et 51 sont pointes contre pointes comme représenté en bas de la figure 1, toute sollicitation vibratoire ou autre ne peut ensuite avoir pour effet que de faire tourner légèrement l'écrou jusqu'à ce que la situation d'interpénétration des dents soit réalisée.

Pour desserrer l'écrou, il suffit de remettre en place les deux outils sur les conformations à six-pans 25 et 11, et de faire tourner ensemble le dispositif 1 et l'écrou 4 dans le sens du dévissage. Les dents 49 et 51 sautent les unes au-dessus des autres avec de brèves compressions du ressort 36 jusqu'à ce que, en raison du mouvement axial de l'écrou 4 vers l'arrière lié au mouvement de dévissage, l'organe de couplage 42 finisse par se dégager de la conformation à six-pans 11 de l'embout 2. L'organe de couplage 42 tourne désormais avec l'écrou 4 dans le sens du dévissage. Une fois le dévissage réalisé, l'écrou 4 et le dispositif 1 peuvent ensemble se déplacer aussi loin que souhaité vers l'arrière (donc vers la gauche de la figure 1) pour permettre sans aucune gêne l'opération technique voulue sur le raccord.

Lorsque le raccord est usé, la course élastique résiduelle en compression du ressort 36 et la distance D' (figure 5) qui reste permise aux patins 39 à l'état verrouillé sont suffisantes pour permettre aux dents 49 et 51 de se franchir par mouvement de cliquet.

Bien entendu, l'invention n'est pas limitée aux exemples décrits et représentés.

On pourrait également associer le dispositif à l'embout mâle 2 et le faire coopérer, pour le verrouillage, avec la conformation à six-pans 13 de l'écrou. Cette solution est moins préférée car elle ne permet pas de dégager les éléments du raccord une fois le desserrage réalisé.

Si l'on souhaite que les dents 49 et 51 aient une résistance différente au vissage et au dévissage, on peut les réaliser dissymétriques mais elles doivent toujours avoir une pente suffisamment faible pour pouvoir se franchir mutuellement sous la simple action d'un couple de rotation exercé sur le dispositif de verrouillage 1 par rapport à l'autre élément qui n'est pas équipé du dispositif.

Il est encore possible de fabriquer des éléments de raccord de canalisation, et en particulier des écrous qui sont directement équipés d'un dispositif selon l'invention, auquel cas le corps 18 et l'écrou 4 peuvent ne constituer qu'une seule et même pièce, ou par exemple deux pièces assemblées ensemble de façon permanente, par soudage ou collage, etc...

## Revendications

1. Dispositif de verrouillage (1) pour un accouplement vissant comprenant un premier (2) et un second (4) éléments rotatifs l'un par rapport à l'autre lors du vissage, le premier élément (2) comprenant un premier filetage (8) et une conformation de prise de rotation (11) distante du premier filetage (8), le dispositif de verrouillage (1) étant monté sur le deuxième élément (4) et comprenant :
- un organe de couplage (42) avec la conformation de prise (11),
- un organe d'arrêt (38) solidaire en rotation d'un corps (18) porté par le deuxième élément (4),
- des moyens d'accouplement libérables (49, 51) entre l'organe de couplage (42) et l'organe d'arrêt (38),
**caractérisé en ce que** les moyens d'accouplement (49, 51) sont du type à cliquet permettant la rotation relative dans le sens du dévissage lorsque l'actionnement rotatif de dévissage surmonte une résistance élastique prédéterminée.

2. Dispositif selon la revendication 1, **caractérisé en ce que** les moyens d'accouplement comprennent des dents (49,51) dirigées axialement formées sur l'organe de couplage (38) et sur l'organe d'arrêt (42), lesquels sont sollicités l'un vers l'autre par un ressort (36) dans le sens de l'interpénétration des dents.

3. Dispositif selon la revendication 2, **caractérisé en ce que** les deux organes (38,42) sont mobiles axialement par rapport au corps (18) et sont sollicités ensemble par le ressort (36) vers une butée (44) prévue dans le corps (18) pour l'organe de couplage (42).

4. Dispositif selon la revendication 1 ou 2, **caractérisé en ce que** l'organe de couplage (42) est rétractable à l'encontre d'un ressort (36) et comporte une butée (47) d'appui sur un épaulement (48) du premier élément (2) pour limiter l'emprise axiale de l'organe de couplage (42) sur la conformation de prise (11).

5. Dispositif selon l'une des revendications 1 à 4, **caractérisé en ce que** le corps (18) est conformé en coupelle enfermant l'organe d'arrêt (38) et partiellement l'organe de couplage (42).

6. Dispositif selon l'une des revendications 1 à 5, **caractérisé en ce que** l'organe d'arrêt (38) et l'organe de couplage (42) sont montés autour d'un tube (32) du deuxième élément (4), fileté intérieurement (16) pour le vissage avec le premier élément (2).

7. Dispositif selon l'une des revendications 1 à 6, **caractérisé en ce que** le corps (18) est emmanchable sur une seconde conformation de prise (13) solidaire du second élément (4) et présente sa propre conformation de prise (25) utilisable à la place de la seconde conformation de prise (13) pour effectuer la rotation relative des deux éléments (2, 4) à l'aide d'outils.

8. Dispositif selon l'un des revendications 1 à 7, **caractérisé en ce que** le corps (18) est fixé sur le deuxième élément (4) par encliquetage (24, 27).

9. Dispositif selon l'une des revendications 1 à 7, **caractérisé en ce que** le corps (18) est fixé sur le deuxième élément (4) par sertissage (29).

10. Dispositif selon l'une des revendications 1 à 7, **caractérisé en ce que** le corps (18) est réalisé d'une seule pièce avec le deuxième élément (4).

11. Dispositif selon l'une des revendications 1 à 10, **caractérisé en ce qu'**il est d'un seul tenant.

12. Dispositif selon l'une des revendications 1 à 11, carctérisé en ce qu'il se monte entièrement sur le deuxième élément (4).

13. Raccord de canalisation comprenant un embout de canalisation muni d'un filetage mâle et un écrou vissable sur le filetage mâle et monté rotatif sur un autre embout de canalisation, **caractérisé en ce qu'**il comprend en outre un dispositif de verrouillage selon l'une des revendications 1 à 12 pour verrouiller sélectivement la rotation relative des deux éléments constitués par l'écrou et l'embout muni de filetage mâle.

14. Raccord selon la revendication 13, **caractérisé en ce que** le premier élément (2) et l'autre embout de canalisation (3) sont des éléments standards non modifiés.

## Claims

1. A locking device (1) for a screw coupling comprising a first (2) and a second (4) components able to rotate in relation to one another during screwing, the first component (2) comprising a first thread (8) and a rotating engagement formation (11) distant from the first thread (8), the locking device (1) being mounted on the second component (4) and comprising:
- a coupling component (42) for coupling with the engagement formation (11),
- a stop component (38) connected for common rotation with a body (18) carried by the second component (4),
- disconnectable coupling means (49, 51) between the coupling component (42) and the stop component (38),
**characterized in that** the coupling means (49, 51) are of the type with a ratchet allowing relative rotation in the direction of unscrewing when the unscrewing rotating actuation overcomes a predetermined elastic resistance.

2. The device according to claim 1, **characterized in that** the coupling means comprise axially pointing teeth (49, 51) formed on the coupling component (42) and on the stop component (38), which are urged towards one another by a spring (36) in the direction of teeth interpenetration.

3. The device according to claim 2, **characterized in that** the two components (38, 42) are axially movable in relation to the body (18) and are together urged by the spring (36) towards an abutment (44) provided in the body (18) for the coupling component (42).

4. the device according to claim 1 or 2, **characterized in that** the coupling component (42) can be drawn back against a spring (36) and comprises an abutment (47) for engaging a shoulder (48) of the first component (2) in order to limit the axial extent by which the coupling component (42) is able to cover the engagement formation (11).

5. The device according to one of claims 1 to 4, **characterized in that** the body (18) is formed as a cup enclosing the stop component (38) and partially the coupling component (42).

6. The device according to one of claims 1 to 5, **characterized in that** the stop component (38) and the coupling component (42) are mounted around a tube (32) of the second component (4), which is internally threaded (16) for screwing with the first component (2).

7. The device according to one of claims 1 to 6, **characterized in that** the body (18) can be fitted onto a second engagement formation (13) attached to the second component (4) and has its own engagement formation (25) which can be used in place of the second engagement formation (13) in order to carry out the relative rotation of the two components (2, 4) by means of tools.

8. The device according to one of claims 1 to 7, **characterized in that** the body (18) is secured onto the second component (4) by snap-fit (24, 27).

9. The device according to one of claims 1 to 7, **characterized in that** the body (18) is secured onto the second component (4) by crimping (29).

10. The device according to one of claims 1 to 7, **characterized in that** the body (18) is produced in one piece with the second component (4).

11. The device according to one of claims 1 to 10, **characterized by** being a single unit.

12. The device according to one of claims 1 to 11, **characterized by** being entirely mounted on the second component (4).

13. A pipe coupling comprising a pipe end-portion provided with an external thread and a nut which can be screwed on the external thread and mounted able to rotate on another pipe end-portion, **characterized in that** said coupling also comprises a locking device according to one of claims 1 to 12 for selectively locking against relative rotation the two components constituted by the nut and the end-portion provided with an external thread.

14. The coupling according to claim 13, **characterized in that** the first component (2) and the other pipe end-end (3) are standard non-modified components.

## Patentansprüche

1. Verriegelungsvorrichtung (1) für eine Schraubkupplung, welche ein erstes (2) und ein zweites (4) Element umfasst, welche beim Schrauben zueinander drehbar sind, wobei das erste Element (2) ein erstes Gewinde (8) und eine vom ersten Gewinde (8) entfernte Drehanschlussstelle (11) umfasst, wobei die Verriegelungsvorrichtung (1) auf dem zweiten Element (4) befestigt ist und umfasst:
- ein Kupplungselement (42) für die Drehanschlussstelle (11),
- ein drehfest mit einem vom zweiten Element (4) getragenen Körper (18) verbundenes Halteelement (38),
- lösbare Kupplungsmittel (49, 51) zwischen dem Kupplungselement (42) und dem Halteelement (38),
**dadurch gekennzeichnet, dass** die Kupplungsmittel (49, 51) vom Sperrklinkentyp sind, die die relative Drehung in Abschraubrichtung ermöglicht, wenn die Drehbetätigung zum Abschrauben einen vorbestimmten elastischen Widerstand überschreitet.

2. Vorrichtung nach Anspruch 1, **dadurch gekennzeichnet, dass** die Kupplungsmittel Zähne (49, 51) umfassen, die axial ausgerichtet und auf dem Kupplungselement (42) und dem Halteelement (38) ausgebildet sind, die zueinander durch eine Feder (36) in Richtung des Ineinandergreifens der Zähne gedrückt werden.

3. Vorrichtung nach Anspruch 2, **dadurch gekennzeichnet, dass** die zwei Elemente (38, 42) axial in Bezug zum Körper (18) beweglich sind und gemeinsam von der Feder (36) zu einem Anschlag (44) gedrückt werden, der im Körper (18) für das Kupplungselement (42) vorgesehen ist.

4. Vorrichtung nach Anspruch 1 oder 2, **dadurch gekennzeichnet, dass** das Kupplungselement (42) gegen eine Feder (36) einziehbar ist und einen Anschlag (47) zur Abstützung auf einem Absatz (48) des ersten Elements (2) umfasst, um das axiale Eingreifen des Kupplungselements (42) auf der Drehanschlussstelle (11) zu begrenzen.

5. Vorrichtung nach einem der Ansprüche 1 bis 4, **dadurch gekennzeichnet, dass** der Körper (18) in Manschettenform ausgebildet ist und das Halteelement (38) und teilweise das Kupplungselement (42) einschließt.

6. Vorrichtung nach einem der Ansprüche 1 bis 5, **dadurch gekennzeichnet, dass** das Halteelement (38) und das Kupplungselement (42) um ein Rohr (32) des zweiten Elements (4) montiert sind, das innen ein Gewinde (16) zum Verschrauben mit dem ersten Element (2) aufweist.

7. Vorrichtung nach einem der Ansprüche 1 bis 6, **dadurch gekennzeichnet, dass** der Körper (18) auf eine zweite, mit dem zweiten Element (4) verbundene Drehanschlussstelle (13) aufsteckbar ist und seine eigene Drehanschlussstelle (25) aufweist, die an Stelle der zweiten Drehanschlussstelle (13) verwendet werden kann, um die relative Drehung der beiden Elemente (2, 4) mit Hilfe von Werkzeugen auszuführen.

8. Vorrichtung nach einem der Ansprüche 1 bis 7, **dadurch gekennzeichnet, dass** der Körper (18) auf dem zweiten Element (4) durch Einrasten (24, 27) befestigt ist.

9. Vorrichtung nach einem der Ansprüche 1 bis 7, **dadurch gekennzeichnet, dass** der Körper (18) auf dem zweiten Element (4) durch Falzen (29) befestigt ist.

10. Vorrichtung nach einem der Ansprüche 1 bis 7, **dadurch gekennzeichnet, dass** der Körper (18) einstückig mit dem zweiten Element (4) hergestellt ist.

11. Vorrichtung nach einem der Ansprüche 1 bis 10, **dadurch gekennzeichnet, dass** sie als eine Einheit ausgebildet ist.

12. Vorrichtung nach einem der Ansprüche 1 bis 11, **dadurch gekennzeichnet, dass** sie zur Gänze auf dem zweiten Element (4) montiert wird.

13. Leitungsanschlussvorrichtung, umfassend einen Leitungsansatz, der mit einem männlichen Gewinde versehen ist, und eine Mutter, die auf das männliche Gewinde geschraubt werden kann und drehbar auf einem weiteren Leitungsansatz montiert ist, **dadurch gekennzeichnet, dass** sie ferner eine Verriegelungsvorrichtung nach einem der Ansprüche 1 bis 12 umfasst, um selektiv die relative Drehung der beiden von der Mutter und dem mit dem männlichen Gewinde versehenen Ansatz gebildeten Elemente zu verriegeln.

14. Anschlussstück nach Anspruch 13, **dadurch gekennzeichnet, dass** das erste Element (2) und der weitere Leitungsansatz (3) unveränderte Standardelemente sind.
